(19) Europäisches Patentamt
European Patent Office
Office européen des brevets

(11) Veröffentlichungsnummer: **0 447 904 B1**

# (12) EUROPÄISCHE PATENTSCHRIFT

(45) Veröffentlichungstag der Patentschrift: **26.10.94**

(51) Int. Cl.5: **C08F 4/685**, C08F 4/629, C08F 10/02

(21) Anmeldenummer: **91103643.2**

(22) Anmeldetag: **09.03.91**

## (54) Übergangsmetall-Katalysatorkomponente für ein Ziegler-Katalysatorsystem und dessen Verwendung.

(30) Priorität: **19.03.90 DE 4008734**

(43) Veröffentlichungstag der Anmeldung: **25.09.91 Patentblatt 91/39**

(45) Bekanntmachung des Hinweises auf die Patenterteilung: **26.10.94 Patentblatt 94/43**

(84) Benannte Vertragsstaaten: **AT DE ES GB IT NL SE**

(56) Entgegenhaltungen:
**EP-A- 0 166 888**
**EP-A- 0 179 303**
**EP-A- 0 264 090**

(73) Patentinhaber: **BASF Aktiengesellschaft**
**Carl-Bosch-Strasse 38**
**D-67063 Ludwigshafen (DE)**

(72) Erfinder: **Bueschges, Ulrich, Dr.**
**Schauinslandstrasse 9**
**W-6800 Mannheim 1 (DE)**
Erfinder: **Saive, Roland, Dr.**
**Pfarrer-Friedrich-Strasse 44**
**W-6700 Ludwigshafen (DE)**
Erfinder: **Follmer, Godogredo, Dr.**
**Am Hoellpfad 1a**
**W-6719 Neuleiningen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft eine Übergangsmetall-Katalysatorkomponente für ein Ziegler-Katalysatorsystem, erhältlich durch

1) Mischen in einem Lösungsmittel eines anorganischen oxidischen Trägerstoffes mit

1.1) einem Vanadiumtrihalogenid-Alkohol-Komplex der Formel $VY_3 \cdot nZ\text{-}OH$, worin stehen

Y für Chlor oder Brom,

n für eine Zahl von 1 bis 6 und

Z für einen einwertigen, nicht mehr als 10 Kohlenstoffatome aufweisenden gesättigten aliphatischen, aromatischen oder araliphatischen Kohlenwasserstoffrest und

1.2) einem Titanhalogenid oder einem Titantrihalogenid-Aluminiumtrihalogenid-Komplex, wobei das Halogen Chlor und/oder Brom ist, oder einem Titantrihalogenid-Komplex der Formel $TiY_3 \cdot nZ\text{-}OH$ oder deren Gemische, worin stehen

Y für Chlor oder Brom,

n für eine Zahl von 1 bis 6 und

Z für einen einwertigen, nicht mehr als 10 Kohlenstoffatome aufweisenden gesättigten aliphatischen, aromatischen oder araliphatischen Kohlenwasserstoffrest und

1.3) einer Verbindung der Formel $BX_nY_mR_p$ oder $SiX_nY_mR_q$ oder deren Gemische, worin stehen

X für einen Rest OR

Y für Chlor, Brom oder Wasserstoff und

R für einen $C_1$- bis $C_{18}$-Kohlenwasserstoffrest mit der Maßgabe, daß $n > 0$ und $n+m+p = 3$ oder $n+m+q = 4$ sein soll,

2) Entfernung des Lösungsmittels durch Verdampfung,

3) Mischen des festphasigen Zwischenproduktes der Stufe (2) mit

3.1) einer Organoaluminium-Katalysatorkomponente der Formel $AlR_mX_{3-m}$, worin stehen

R für einen $C_1$- bis $C_{18}$-Kohlenwasserstoffrest,

m für eine Zahl von 1 bis 3, und

X für einen Rest OR, Chlor, Brom oder Wasserstoff,

3.2) einem organischen Carbonsäureester oder einer organischen Siliciumverbindung oder deren Gemischen in einem organischen Lösungsmittel und

4) gewünschtenfalls Isolierung des festphasigen Zwischenproduktes durch Filtrieren, Waschen und Trocknen.

Weiterhin betrifft die vorliegende Erfindung den Einsatz dieser Katalysatorkomponenten in einem Ziegler-Katalysatorsystem für ein Verfahren zur Herstellung von Homopolymerisaten des Ethens sowie Copolymerisaten des Ethens mit untergeordneten Mengen an $C_3$- bis $C_8$-, insbesondere $C_4$- bis $C_6$-$\alpha$-Monoolefinen durch Polymerisation der Monomeren bei Temperaturen von 30 bis 200, bevorzugt 50 bis 100 °C und Drücken von 1 bis 200 bar.

Polymerisationsverfahren dieser Art sind bekannt und wurden beispielsweise in der EP-A 0 166 888 beschrieben. Die dort offenbarte Übergangsmetall-Katalysatorkomponente (1), die erhältlich ist aus einer Übergangsmetall-Ausgangskomponente (2b), bestehend aus einem Gemisch einer Vanadium- und einer Titankomponente sowie gegebenenfalls einem Zirkontetrahalogenid, erlaubt die Herstellung von Homo- und Copolymerisaten des Ethens mit gezielt einstellbarer, sehr breiter Molmassenverteilung bei guter Produktivität und Kornbeschaffenheit der Produkte. Bei speziellen Aufgabenstellungen wie der Herstellung von hochmolekularen, hochdichten Produkten, ist die Produktivität des Systems und die Kornbeschaffenheit der erhaltenen Polymerisate noch nicht ausreichend.

Darüber hinaus sind noch zu verbessern die Beständigkeit gegenüber Spannungsrißkorrosion, die Blasenstabilität beim Folienblasprozeß sowie die mechanische Festigkeit der erhaltenen Folien. Weiterhin müssen auch noch die in Kohlenwasserstoffen löslichen Anteile sowie der Gelgehalt reduziert werden.

Aus der EP-A00 78 996 ist eine Übergangsmetall-Katalysatorkomponente (1) bekannt, die erhältlich ist durch Auftragen von $VCl_3$ aus einem Alkohol als Lösungsmittel auf $SiO_2$, worauf in einer zweiten Stufe mit einer Aluminiumalkylverbindung umgesetzt wird. Diese Katalysatorkomponente ist aber zum Erreichen des Zieles, bei zugleich guter Produktivität Homo- bzw. Copolymerisate des Ethens mit guter Kornbeschaffenheit und mittelbreiter Molmassenverteilung herzustellen, ungeeignet. Darüber hinaus sind noch zu verbessern die Beständigkeit gegenüber Spannungsrißkorrosion, die Blasenstabilität beim Folienblasprozeß sowie die mechanische Festigkeit der erhaltenen Folien. Weiterhin müssen auch noch die in Kohlenwasserstoffen löslichen Anteile sowie der Gelgehalt reduziert werden.

Schließlich ist in der US-PS 4 508 842 eine Übergangsmetall-Katalysatorkomponente (1) beschrieben, die durch Auftragen von $VCl_3$ aus einem Elektronendonator als Lösungsmittel auf $SiO_2$ hergestellt wird. Sie

ist aber ebenfalls zum Erreichen des Zieles, bei zugleich guter Produktivität Polymerisate mit guter Kornbeschaffenheit zu erzeugen, ungeeignet. Darüber hinaus sind noch zu verbessern die Beständigkeit gegenüber Spannungsrißkorrosion, die Blasenstabilität beim Folienblasprozeß sowie die mechanische Festigkeit der erhaltenen Folien. Weiterhin müssen auch noch die in Kohlenwasserstoffen löslichen Anteile sowie der Gelgehalt reduziert werden.

Aufgabe der vorliegenden Erfindung war es, eine neue Übergangsmetall-Katalysatorkomponente zur Verfügung zu stellen, die es gegenüber den bekannten erlaubt, bei zugleich hoher Produktivität Polymerisate, insbesondere Copolymerisate von Ethen mit höheren $\alpha$-Olefinen mit gezielt einstellbarer Molmasse und Molmassenverteilung bei guter Verarbeitbarkeit, guter Kornbeschaffenheit, hoher Beständigkeit gegenüber Spannungsrißkorrosion, geringen in Kohlenwasserstoffen löslichen Anteilen, mit besonders guter Blasenstabilität beim Folienblasprozeß sowie hoher mechanischer Festigkeit der Folien und äußerst geringem Gelgehalt herzustellen.

Demgemäß wurde die eingangs definierte Übergangsmetall-Katalysatorkomponente gefunden. Weiterhin wurde ein Verfahren gefunden zur Herstellung von Homopolymerisaten des Ethens sowie Copolymerisaten des Ethens mit untergeordneten Mengen an $C_3$- bis $C_8$-$\alpha$-Monoolefinen durch Polymerisation der Monomeren bei Temperaturen von 30 bis 200 °C und Drücken von 0,1 bis 200 bar mittels eines Ziegler-Katalysatorsystems aus

A) einer Übergangsmetall-Katalysatorkomponente und

B) einer Organoaluminium-Katalysatorkomponente der Formel $AlR_mX_{3-m}$, worin stehen

R für einen $C_1$- bis $C_{18}$-Kohlenwasserstoffrest,

m für eine Zahl von 1 bis 3 und

X für einen Rest OR, Chlor, Brom oder Wasserstoff

sowie

C) einer zusätzlichen Katalysatorkomponente,

die entweder mindestens eine Organohalogenverbindung oder mindestens eine anorganische oder mindestens eine organische Stickstoff-Sauerstoff-Verbindung wie auch Gemische derselben darstellt,

bei dem man die erfindungsgemäße Übergangsmetall-Katalysatorkomponente als Komponente A) verwendet.

Zu den einzelnen Aufbaukomponenten sowie Verfahrensstufen ist folgendes auszuführen:

Als anorganische oxidische Trägerstoffe der Stufe 1 eignen sich beispielsweise Siliciumdioxid, Boro- und Aluminiumsilikat, Aluminiumphosphat oder Silicium-Metall-Cogele, wobei das Metall beispielsweise Magnesium, Titan und/oder Zirkon sein kann. Die Trägerstoffe haben im allgemeinen einen Teilchendurchmesser von 1 bis 1000 µm, vorzugsweise 1 bis 400 µm, ein Porenvolumen von 0,3 bis 3 $cm^3/g$, vorzugsweise 1 bis 2,5 $cm^3/g$ und eine Oberfläche von 100 bis 1000 $m^2/g$, bevorzugt 200 bis 400 $m^2/g$. Besonders bewährt hat sich ein Aluminiumsilikat der Formel $SiO_2 \cdot aAl_2O_3$, wobei a für eine Zahl von 0 bis 2, bevorzugt 0 bis 0,5 steht.

Der Vanadiumtrihalogenid-Alkohol-Komplex der Stufe (1.1) hat die Formel $VY_3 \cdot nZ\text{-}OH$, worin stehen

Y für Chlor oder Brom, vorzugsweise Chlor,

n für eine Zahl von 1 bis 6, vorzugsweise 3 bis 4 und

Z für einen einwertigen, nicht mehr als 10, vorzugsweise nicht mehr als 8 Kohlenstoffatome aufweisenden gesättigt-aliphatischen oder teilweise gesättigt-aliphatischen, teils aromatischen Kohlenwasserstoffrest, insbesondere einen nicht mehr als 6 Kohlenstoffatome aufweisenden Alkylrest.

Dabei kann das zugrundeliegende Vanadiumtrihalogenid ein bei Ziegler-Katalysatorsystemen übliches sein. Als alkoholische Komponente eignen sich z.B. Methanol, Ethanol, Propanol-2, Butanol-2 und 2-Methylbutanol-2. Die Komplexe können aus Vanadiumtrichlorid und Propanol-2 in Tetrahydrofuran als Lösungsmittel nach üblichen Methoden hergestellt werden, z.B. nach D.C. Bradley, M.L. Metha, Can. J. Chem., 40 (1962), 1710/3. Die Komplexe können einzeln oder als Gemische mehrerer Komplexe eingesetzt werden.

Als Komponente der Stufe (1.2) ist geeignet ein Titantrihalogenid, wobei das Halogen Chlor und/oder Brom ist, oder ein Titantrihalogenid-Komplex der Formel $TiY_3 \cdot {}_nZ\text{-}OH$, worin stehen

Y für Chlor oder Brom

n für eine Zahl von 1 bis 6 und

Z für einen einwertigen, nicht mehr als 10 Kohlenstoffatome aufweisenden gesättigten aliphatischen, aromatischen oder araliphatischen Kohlenwasserstoffrest.

Das einzusetzende Titantrihalogenid kann wiederum ein bei Ziegler-Katalysatorsystemen übliches sein, z.B. ein bei der Reduktion eines Titantetrahalogenids mittels Wasserstoff, Aluminium oder aluminiumorganischen Verbindungen erhaltenes Reaktionsprodukt. Als besonders gut geeignet haben sich erwiesen z.B. Trichloride der Formel $TiCl_3$, wie sie bei der Reduktion von Titantetrachlorid mittels Wasserstoff

anfallen sowie Trichloride der Formel $TiCl_3 \cdot 1/3\ AlCl_3$, wie sie bei der Reduktion von Titantetrachlorid mittels metallischem Aluminium anfallen. Es Kann auch der o.g. Titantrihalogenid-Alkohol-Komplex oder ein Titantrihalogenid-Alumniumtrihalogenid-Alkohol komplex eingesetzt werden, für den sinngemäß das gleiche wie für den Vanadiumtrihalogenid-Alkohol-Komplex gilt. Die Titantrihalogenide und Titantrichlorid-Alkohol-Komplexe können einzeln oder im Gemisch verwendet werden.

Bevorzugt werden $TiCl_3$, $TiCl_3 \cdot 1/3\ AlCl_3$, $TiCl_3 \cdot 4$ iPrOH sowie $TiCl_3 \cdot 1/3\ AlCl_3 \cdot 5$ iPrOH verwendet.

Als Komponente der Stufe (1.3) sind Silizium- oder Borverbindungen der Formel $BX_nY_mR_p$ oder $SiX_nY_mR_q$ geeignet, worin stehen X für einen Rest OR, Y für Chlor, Brom oder Wasserstoff und R für einen $C_1$- bis $C_{18}$-Kohlenwasserstoffrest mit der Maßgabe, daß $n > 0$ und $n+m+p = 3$ oder $n+m+q = 4$ sein soll. Bevorzugt sind Verbindungen der Formel $SiX_nR_q$, worin stehen X für einen Rest OR und R für einen aliphatischen oder aromatischen $C_1$- bis $C_{18}$-Kohlenwasserstoffrest, wobei $n > 0$ und $n+q = 4$ sein soll. Besonders bevorzugt sind Verbindungen der Formel $SiX_nRq$ in der $n > 1$, $n+q = 4$ und R ein Kohlenwasserstoffrest mit 1 bis 10 Kohlenstoffatomen ist.

Geeignete Beispiele für diese Verbindungen sind Trimethyl-, Triethyl-, Tripropyl-, Tributyl- sowie Triphenylborat, wie auch ihre gemischt substituierten Analoga, Tetramethoxy-, Tetraethoxy-, Tetrapropoxy-, Tetrabutoxy- sowie Tetraphenoxysilan wie auch ihre gemischt substituierten Analoga, Methyl-, Ethyl-, Propyl-, Butyl- sowie Phenyltrimethoxysilan, -triethoxysilan, -tripropoxysilan, -tributoxysilan sowie -triphenoxysilan wie auch ihre gemischt substituierten Analoga, Dimethyl-, Diethyl-, Dipropyl-, Dibutyl- sowie Diphenyldimethoxysilan, -diethoxysilan, -dipropoxysilan, -dibutoxysilan sowie -diphenoxysilan wie auch ihre gemischt substituierten Analoga, Trimethyl-, Triethyl-, Tripropyl-, Tributyl sowie Triphenylmethoxysilan, -ethoxysilan, -propoxysilan, -butoxysilan sowie -phenoxysilan.

Bevorzugt werden Tri-i-propylborat sowie Tri-i-butyl-borat, Tetrapropoxy- sowie Tetrabutoxysilan, i-Propyl- sowie i-Butyltrimethoxysilan sowie -triethoxysilan, Di-i-propyl- sowie Di-i-butyldimethoxysilan sowie -diethoxysilan, Trimethyl- sowie Triethyl-i-propoxysilan sowie -i-butoxysilan verwendet.

Dabei werden pro mol Vanadiumverbindung der Stufe (1.1) 0,002 bis 3 mol, bevorzugt 0,01 bis 1 mol der Titanverbindung der Stufe (1.2) und 0,01 bis 4 mol, bevorzugt 0,1 bis 2 mol der Silizium- oder Borverbindung der Stufe (1.3) verwendet.

Geeignete organische Lösungsmittel in der Stufe (1) sind gesättigte aliphatische oder teils gesättigt-aliphatische, teils aromatische Kohlenwasserstoffe, die 1 bis 2 Oxasauerstoffatome und 3 bis 19 Kohlenstoffatome aufweisen, vorzugsweise gesättigte aliphatische oder teils gesättigt-aliphatische, teils aromatische Oxakohlenwasserstoffe, die 1 Oxasauerstoffatom und 3 bis 11 Kohlenstoffatome aufweisen, insbesondere ringgeschlossene gesättigt aliphatische Oxakohlenwasserstoffe, die 1 Oxasauerstoffatom und 4 bis 6 Kohlenstoffatome aufweisen. Geeignete Lösungsmittel sind beispielsweise Ethylenglykoldimethylether, Anisol, Tetrahydrofuran, Dioxan sowie deren Gemische.

Als Komponente der Stufe (3.1) wird eine Organoaluminium-Katalysatorkomponente der Formel $AlR_mX_{3-m}$ verwendet, worin stehen

- R für einen $C_1$- bis $C_{18}$-Kohlenwasserstoffrest, vorzugsweise eine $C_1$- bis $C_{12}$-Alkylrest, insbesondere einen $C_2$- bis $C_8$-Alkylrest,
- m für eine Zahl von 1 bis 3, vorzugsweise 2 bis 3, insbesondere 2 und
- X für einen Rest OR, Chlor, Brom bzw. Wasserstoff, vorzugsweise einen OR-Rest und Chlor, insbesondere Chlor.

Beispiele für geeignete Organoaluminiumverbindungen sind

$Al(C_2H_5)_3$, $Al(C_2H_5)_2Cl$, $Al(C_2H_5)_2Br$, $Al(C_2H_5)_{1,5}Cl_{1,5}$, $Al(C_2H_5)_{1,5}Br_{1,5}$, $Al(C_2H_5)Cl_2$, $Al(C_2H_5)Br_2$, $Al(C_4H_9)_3$, $Al(C_4H_9)_2Cl$, $Al(C_4H_9)Cl_2$, $Al(C_2H_5)_2H$, $Al(C_4H_9)_2H$, $Al(C_3H_7)_2(OC_3H_7)$ oder $Al(C_2H_5)_{1,5}(OC_2H_5)_{1,5}$, III

Isoprenylaluminium sowie deren Gemische. Besonders gut geeignet sind Aluminiumverbindungen der Formeln $C_2H_5AlCl_2$, $(C_2H_5)_2AlCl$ sowie Isoprenylaluminium.

Die Komponenten der Stufen (1.1), (1.2) und (3.1) werden vorzugsweise in solchen Mengenverhältnissen eingesetzt, daß ein Atomverhältnis der Summe der Übergangsmetalle Vanadium und Titan des festphasigen Zwischenproduktes der Stufe (2) zu Aluminium der Organoaluminium-Komponente der Stufe (3.1) von 1:0,05 bis 1:30, bevorzugt 1:0,1 bis 1:5 resultiert.

Als organische Carbonsäureester oder organische Siliciumverbindungen der Stufe (3.2) sind Verbindungen der folgenden Formel geeignet:

$$R^1-\overset{\overset{O}{\|}}{C}-OR^2 \quad ,$$

$R^1R^2R^3SiX$,

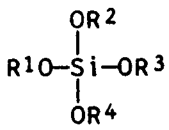 , 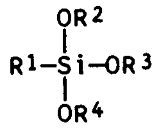 , 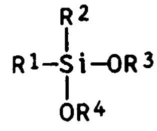 , 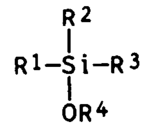

$R^1R^2R^3Si\text{-}SiR^4R^5R^6$ ,

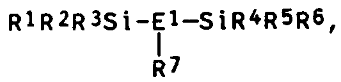

oder

$R^1R^2R^3Si\text{-}E^2\text{-}SiR^4R^5R^6$ ,

worin stehen
$R^1$ bis $R^6$ für einen aliphatischen, aromatischen oder araliphatischen $C_1$- bis $C_{12}$-Kohlenwasserstoffrest, vorzugsweise eine aliphatische, aromatische oder araliphatische $C_1$- bis $C_{12}$-Alkylgruppe, insbesondere eine $C_2$- bis $C_8$-Alkylgruppe, eine Phenyl- oder Phenyl-($C_2$- bis $C_8$-)alkylgruppe,
$R^7$ für Wasserstoff oder einen $C_1$-$C_{12}$-Kohlenwasserstoffrest, vorzugsweise Wasserstoff oder eine $C_1$- $C_{12}$-Alkylgruppe, insbesondere Wasserstoff,
X für Brom, Chlor oder einen ungesättigten $C_2$- bis $C_{18}$-Kohlenwasserstoffrest, vorzugsweise Brom, Chlor oder eine ungesättigte $C_2$- bis $C_{12}$-Alkenylgruppe, insbesondere Chlor oder eine $C_2$- bis $C_8$-Alkenylgruppe,
$E^1$ für ein Element der V. Hauptgruppe, vorzugsweise Stickstoff, Phosphor und Arsen, und insbesondere Stickstoff,
$E^2$ für ein Element der VI. Hauptgruppe, vorzugsweise Schwefel und Sauerstoff und insbesondere Sauerstoff.

Beispiele für geeignete organische Carbonsäureester sind Methyl-, Ethyl-, Propyl-, Butyl-, Pentyl- oder Phenylester der Essigsäure, Benzoesäure, Phenylessigsäure sowie am aromatischen Ring alkylsubstituierte Derivate dieser Säuren. Bevorzugt werden Phenyl-, Benzyl-, t-Butyl- sowie Neopentylester der Essigsäure, der Benzoesäure und der Phenylessigsäure verwendet.

Geeignete Siliciumverbindungen sind beispielsweise Trimethyl-, Triethyl-, Tripropyl-, Tributyl-, Tripentyl-, Trihexyl- sowie Triphenylchlorsilan wie auch ihre gemischt substituierten Analoga, Tetramethoxy-, Tetraethoxy-, Tetrapropoxy, Tetrabutoxy- sowie Tetraphenoxysilan wie auch ihre gemischt substituierten Analoga, Methyl-, Ethyl-, Propyl-, Butyl- sowie Phenyltrimethoxysilan, -triethoxysilan, -tripropoxysilan, -tributoxysilan sowie -triphenoxysilan wie auch ihre gemischt substituierten Analoga, Dimethyl-, Diethyl-, Dipropyl-, Dibutyl- sowie Diphenyldimethoxysilan, -diethoxysilan, -dipropoxysilan, -dibutoxysilan sowie -diphenoxysilan wie auch ihre gemischt substituierten Analoga, Trimethyl-, Triethyl-, Tripropyl-, Tributyl- sowie Triphenylmethoxysilan, -ethoxysilan, -propoxysilan, -butoxysilan sowie -phenoxysilan wie auch ihre gemischt substituierten Analoga, Hexamethyl-, Hexaethyl-, Hexapropyl-, Hexabutyl- sowie Hexaphenyldisiian wie auch ihre gemischt substituierten Analoga, Hexamethyl-, Hexaethyl-, Hexapropyl-, Hexabutyl- sowie Hexaphenyldisilazan wie auch ihre gemischt substituierten Analoga, Hexamethyl-, Hexaethyl-, Hexapropyl-, Hexabutyl- sowie Hexaphenyldisiloxan wie auch ihre gemischt substituierten Analoga.

Bevorzugt werden Tributyl-, Tripentyl-, Trihexyl- sowie Triphenylchlorsilan, Tetrapropoxy- sowie Tetrabutoxysilan, i-Propyl- sowie i-Butyltrimethoxysilan sowie -triethoxysilan, Di-i-propyl- sowie Di-i-butyldimethoxysilan sowie -diethoxysilan, Trimethyl- sowie Triethyl-i-propoxysilan sowie -i-butoxysilan, Hexamethyldisilan, Hexamethyldilazan sowie Hexamethyldisiloxan verwendet.

Bei den Lösungsmitteln der Stufe (3.2) handelt es sich um organische Lösungsmittel, die gegenüber den Komponenten der Stufe (3) inert sind. Geeignete Lösungsmittel sind beispielsweise Kohlenwasserstoffe wie Hexan, Heptan oder Benzine, bei Raumtemperatur flüssige gesättigte Kohlenwasserstoffe. Bevorzugt werden Pentan, Hexan sowie Heptan verwendet.

Zur Herstellung der Mischung der Stufe (1) werden die Vanadium- und Titankomponenten der Stufen (1.1), (1.2) und (1.3) vorzugsweise in einem der oben aufgeführten Lösungsmittel oder Lösungsmittelgemischen gelöst und der anorganisch oxidische Trägerstoff als Substanz oder in einem der oben genannten Lösungsmittel oder Lösungsmittelgemische suspendiert, unter Rühren zugegeben und 15 bis 200 Minuten bei Raumtemperatur weitergerührt. Das Gewichtsverhältnis des anorganischen oxidischen Trägerstoffes zur Summe der Vanadium- und Titankomponenten der Stufen (1.1) und (1.2) liegt zwischen 10 zu 1 bis 1 zu 3, bevorzugt 5:1 bis 1:2. Das molare Verhältnis der Vanadiumkomponente der Stufe (1.1) zur Komponente der Stufe (1.3) liegt im allgemeinen zwischen 1:100 bis 4:1, bevorzugt 1:10 bis 2:1.

In der Stufe (2) wird das Lösungsmittel oder Lösungsmittelgemisch bis zur trockenen Konsistenz des Zwischenproduktes verdampft. Dies kann bei erhöhter Temperatur und unter vermindertem Druck durchgeführt werden. Das trockene Zwischenprodukt kann noch Lösungsmittel komplex gebunden enthalten.

Zur Herstellung der Mischung der Stufe (2) wird bevorzugt in getrennten Ansätzen eine 0,1 bis 50 gew.-%ige, vorzugsweise etwa 25 gew.-%ige Suspension des festphasigen Zwischenproduktes (2) sowie eine 5 bis 80 gew. -%ige, vorzugsweise etwa 20 gew.-%ige Lösung des Aluminiumkomponente (3.1) in Hexan, Heptan, Benzinen oder deren Gemischen hergestellt. Danach vereinigt man die Suspension und die Lösung unter Rühren in solchen Mengenverhältnissen, daß das gewünschte Gewichtsverhältnis erreicht wird. Zu dieser Suspension wird der organische Carbonsäureester oder die organische Siliciumverbindung oder deren Gemische der Stufe (3.2) unter weiterem Rühren zugegeben. Man kann diese Komponenten der Stufe (3.2), aber auch zu der Lösung der Aluminiumkomponente (3.1) geben und sie anschließend in die Suspension des festphasigen Zwischenproduktes (3) geben. Die Suspension wird 15 bis 600 Minuten, bevorzugt 6 bis 300 Minuten bei Temperaturen von -25 bis 120 °C, bevorzugt 25 bis 80 °C gerührt, wobei die Bildung der als Suspension vorliegenden Übergangsmetall-Katalysatorkomponente abgeschlossen ist. Diese kann unmittelbar in Form der erhaltenen Suspension als Übergangsmetall-Katalysatorkomponente (A) verwendet werden. Gewünschtenfalls kann das festphasige Produkt (3) isoliert und dann als Übergangsmetall-Katalysatorkomponente (A) eingesetzt werden. Hierzu trennt man das festphasige Produkt (3) von der flüssigen Phase mittels Filtration ab und wäscht es mit reinem Lösungsmittel, worauf es getrocknet wird, beispielsweise im Vakuum.

Das Ziegler-Katalysatorsystem zur Homo- und Copolymerisation des Ethens besteht aus

A) der erfindungsgemäßen Übergangsmetall-Katalysatorkomponente

B) einer Organoaluminium-Katalysatorkomponente der Formel $AlR_mX_{3-m}$, worin stehen

- R für einen $C_1$- bis $C_{18}$-Kohlenwasserstoffrest,
- m für eine Zahl von 1 bis 3 und
- X für einen Rest OR, Chlor, Brom oder Wasserstoff und

C) einer zusätzlichen Katalysatorkomponente,

die entweder mindestens eine Organohalogenverbindung oder mindestens eine anorganische oder mindestens eine organische Stickstoff-Sauerstoff-Verbindung wie auch Gemische derselben darstellt.

Als Komponente (B) sind die in der Stufe (3.1) aufgeführten Verbindungen geeignet. Besonders haben sich Triethyl- sowie Tri-i-butylaluminium bewährt. Als geeignete Organohalogen-Katalysatorkomponente (C) eignen sich gesättigte aliphatische Halogenkohlenwasserstoffe, olefinisch ungesättigte aliphatische Halogenkohlenwasserstoffe, acetylenisch ungesättigte aliphatische Halogenkohlenwasserstoffe, aromatische Halogenkohlenwasserstoffe sowie olefinisch ungesättigte aliphatische halogenierte Carbonsäureester, Stickoxide, Nitroso- und Nitroverbindungen sowie Nitrite und Nitrate, wie NO, $NO_2$, $N_2O$, Nitrosodiphenylamin, Nitrobenzol, Niromethan, i-Butyl- sowie i-Amylnitrit sowie i-Propylnitrat wie auch ihre Gemische, wie sie beispielsweise in der EP 166 888, US 3 462 399 sowie DE-OS 15 45 111 aufgeführt sind. Bevorzugt werden Chloroform, 1,1,1-Trichlorethan sowie Trichlorfluormethan verwendet.

Als Polymerisationsverfahren kommen zum Beispiel die Verfahren des Standes der Technik in Frage, die das Suspensions-Polymerisationsverfahren oder das Trockenphasenpolymerisationsverfahren im gerührten oder gewirbelten Festbett, wie sie beispielsweise in den US 3 242 150, DE-OS 32 39 883, EP 000 4645 beschrieben sind. Bei diesen Verfahren kann die erfindungsgemäße Übergangsmetall-Katalysatorkomponente (A) in unterschiedlicher Weise in den Polymerisationsraum eingebracht werden.

So können die Übergangsmetall-Katalysatorkomponenten (A), die Organoaluminium-Komponente (B) sowie die zusätzlichen Katalysatorkomponente (C)

1. alle örtlich gemeinsam
2. die gleichen 3 Komponenten alle örtlich getrennt voneinander
3. die Übergangsmetallkomponente (A) einerseits und ein Gemisch aus (B) und (C) andererseits örtlich getrennt voneinander oder
4. ein Gemisch aus der Übergangsmetallkomponente (A) und der zusätzlichen Katalysatorkomponente (C) einerseits und die Organoaluminiumkomponente (B) andererseits örtlich getrennt voneinander in den Polymerisationsraum eingebracht werden.

Das Polymerisationsverfahren, das vorzugsweise kontinuierlich durchgeführt wird, eignet sich zum Herstellen von Homopolymerisaten des Ethens, vornehmlich aber von Copolymerisaten des Ethens mit untergeordneten Mengen an $C_3$- bis $C_8$-, insbesondere $C_4$- bis $C_6$-$\alpha$-Monoolefinen, wobei letztere einzeln oder in Form von Gemischen aus zwei oder mehreren Monomeren vorliegen können. Zur Copolymerisation geeignete $\alpha$-Monoolefine sind z.B. Propen, n-Buten-1, 4-Methylpenten-1, n-Hexen-1, n-Hepten-1 und n-Octen-1 oder Gemische aus diesen $\alpha$-Monoolefinen. Dabei werden im allgemeinen 0,1 bis 10 mol-%, bezogen auf das Copolymere des höheren $\alpha$-Monoolefins bzw. der höheren $\alpha$-Monolefine einpolymerisiert.

Die Molekulargewichte der Polymerisate werden mit den üblichen Reglern, insbesondere mittels Wasserstoff eingestellt.

Beispiele 1 bis 5

Herstellung der Übergangsmetall-Katalysatorkomponente (A)

Stufen (1) und (2)

16 g Siliciumdioxid mit einem Teilchendurchmesser von 20 bis 45 µm, einem Porenvolumen von 1,7 $cm^3/g$, einer Oberfläche von 320 $m^2/g$ und eine Lösung von 19 g eines Vanadiumtrihalogenid-Alkohol-Komplexes der Formel $VCl_3 \cdot 4\ ZOH$, worin Z steht für einen Isopropylrest 0,9 g eines Titantrihalogenid-/Aluminiumtrihalogenid-Alkohol-Komplexes der Formel $TiCl_3 \cdot 1/3\ AlCl_3 \cdot 4\ C_3H_7OH$ und 14 g $Si(OC_4H_9)_4$ in 100 g Tetrahydrofuran wurden vereinigt und die dabei erhaltene Suspension kurz gerührt. Anschließend wurde das gebildete festphasige Zwischenprodukt (2) durch Verdampfen der flüchtigen Bestandteile in einem Rotationsverdampfer, bei einem Druck von 10 mbar und einer Temperatur von 70 °C isoliert.

Stufen (3) und (4)

20 g des in Stufe (2) gewonnenen festphasigen Zwischenprodukts wurden in 75 g n-Heptan suspendiert. Diese Suspension wurde mit einer Lösung aus 7,2 g Diethylaluminiumchlorid (DEAC) und einer der in der Tabelle aufgeführten Verbindung (3.2) im Molverhältnis 1:1 (DEAC:Verbindungen) in 50 g n-Heptan versetzt und die daraus resultierende Suspension 120 Minuten bei 65 °C gerührt. Anschließend wurde filtriert, dreimal mit n-Heptan gewaschen und im Vakuum getrocknet.

Vergleichsbeispiel

Für das Vergleichsbeispiel wurde die in der EP-A 0 166 888 beschriebene Übergangsmetall-Katalysatorkomponente (1) hergestellt.

Polymerisation

Ein 10 l Autoklav wurde mit 5 l i-Butan, 0,1 l Buten-1, 6 Nl Wasserstoff, 0,111 g Katalysatorkomponente (A), 5 mmol Tri-i-butylaluminium als Katalysatorkomponente (B) und 2 mmol Trichlorfluormethan als Organohalogen-Katalysatorkomponente (C), beschickt. Dann wurde unter Rühren und bei einem durch Regelung konstant gehaltenen Ethenpartialdruck von 16,5 bar, bei einer Temperatur von 80 °C 90 Minuten polymerisiert. Danach wurde die Polymerisation durch Entspannen abgebrochen.

Tabelle

| Beispiel Nr. | Komponente (3.2) | 1) P/K gPE/gKat | 2) HLMI g/10' | 3) Dichte g/cm³ | 4) XL % | 5) DDI g |
|---|---|---|---|---|---|---|
| 1 | Benzoesäureethylester | 12080 | 12 | .947 | 2.4 | 380 |
| 2 | Tetraethoxysilan | 12240 | 13 | .946 | 2.3 | 420 |
| 3 | Trihexylchlorsilan | 12790 | 15 | .947 | 3.4 | 380 |
| 4 | Hexamethyldisilan | 12380 | 14 | .946 | 3.1 | 410 |
| 5 | Hexamethyldisiloxan | 12400 | 12 | .946 | 2.5 | 400 |
| Vergleichsbeispiel | - | 6870 | 16 | .947 | 6.4 | 250 |

1) P/K = Katalysatorproduktivität in g PE/g Katalysator
2) bestimmt gemäß DIN 53 735, 190°C bei 21.6 kg Belastung
3) bestimmt gemäß DIN 53 479
4) XL = xylollöslicher Anteil
Unter dem xylollöslichen Anteil der hier hergestellten Produkte versteht man den Teil, der nach dem Abkühlen einer bei Siedetemperatur klaren Polymerlösung in Xylol auf 20°C noch gelöst bleibt. Als Konzentration wird 1 %ig eingestellt.
5) DDI (Dart Drop Impact) ASTM 1709, bestimmt an Folien der Stärke 20 µm

## Patentansprüche

**1.** Übergangsmetall-Katalysatorkomponente für ein Ziegler-Katalysatorsystem, erhältlich durch
1) Mischen in einem Lösungsmittel eines anorganischen oxidischen Trägerstoffes mit

1.1) einem Vanadiumtrihalogenid-Alkohol-Komplex der Formel $VY_3 \cdot nZ\text{-}OH$, worin stehen

Y für Chlor oder Brom,

n für eine Zahl von 1 bis 6 und

Z für einen einwertigen, nicht mehr als 10 Kohlenstoffatome aufweisenden gesättigten aliphatischen, aromatischen oder araliphatischen Kohlenwasserstoffrest und

1.2) einem Titanhalogenid oder einem Titantrihalogenid-Aluminiumtrihalogenid-Komplex, wobei das Halogen Chlor und/oder Brom ist, oder einem Titantrihalogenid-Komplex der Formel $TiY_3 \cdot nZ\text{-}OH$ oder deren Gemische, worin stehen

Y für Chlor oder Brom,

n für eine Zahl von 1 bis 6 und

Z für einen einwertigen, nicht mehr als 10 Kohlenstoffatome aufweisenden gesättigten aliphatischen, aromatischen oder araliphatischen Kohlenwasserstoffrest und

1.3) einer Verbindung der Formel $BX_nY_mR_p$ oder $SiX_nY_mR_q$ oder deren Gemische, worin stehen

X für einen Rest OR

Y für Chlor, Brom oder Wasserstoff und

R für einen $C_1$- bis $C_{18}$-Kohlenwasserstoffrest mit der Maßgabe, daß $n > 0$ und $n + m + p = 3$ oder $n + m + q = 4$ sein soll,

2) Entfernung des Lösungsmittels durch Verdampfung,

3) Mischen des festphasigen Zwischenproduktes der Stufe 2) mit

3.1) einer Organoaluminium-Katalysatorkomponente der Formel $AlR_mX_{3-m}$, worin stehen

R für einen $C_1$- bis $C_{18}$-Kohlenwasserstoffrest

m für eine Zahl von 1 bis 3 und

X für einen Rest OR, Chlor, Brom oder Wasserstoff

und

3.2) einem organischen Carbonsäureester oder einer organischen Siliciumverbindung oder deren Gemischen in einem organischen Lösungsmittel, das gegenüber den Komponenten der Stufe (3) inert ist, und

4) gewünschtenfalls Isolierung des festphasigen Zwischenproduktes durch Filtrieren, Waschen und Trocknen.

**2.** Übergangsmetall-Katalysatorkomponente nach Anspruch 1, erhältlich unter Verwendung eines auf Siliciumdioxid oder Siliciumdioxid-Aluminiumoxid basierenden Trägerstoffes in der Stufe (1).

**3.** Übergangsmetall-Katalysatorkomponente nach Anspruch 1 oder 2, erhältlich unter Verwendung von 0,002 bis 3 mol einer Titanverbindung der Stufe (1.2) und 0,01 bis 4 mol einer Verbindung der Stufe (1.3) pro mol einer Vanadiumverbindung der Stufe (1.1).

**4.** Übergangsmetall-Katalysatorkomponente nach einem der Ansprüche 1 bis 3, erhältlich unter Einhaltung eines Atomverhältnisses der Summe der Übergangsmetalle Vanadium und Titan des festphasigen Zwischenproduktes der Stufe (2) zu Aluminium der Organoaluminium-Komponente der Stufe (3.1) von 1:0,05 bis 1:30.

**5.** Übergangsmetall-Katalysatorkomponente nach einem der Ansprüche 1 bis 4, erhältlich unter Verwendung eines organischen Carbonsäureesters der allgemeinen Formel

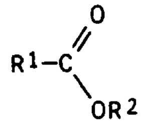

worin stehen $R^1$, $R^2$ für einen $C_1$-$C_{18}$-Kohlenwasserstoffrest als Komponente (3.2).

**6.** Übergangsmetall-Katalysatorkomponente nach einem der Ansprüche 1 bis 5, erhältlich unter Verwendung einer organischen Siliciumverbindung der allgemeinen Formeln

$R^1 R^2 R^3 SiX$,

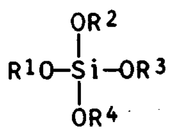 , 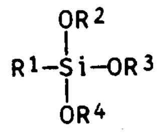 , 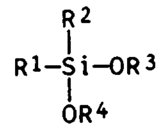 , 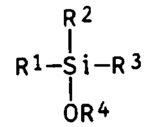

$R^1R^2R^3Si\text{-}SiR^4R^5R^6$ ,

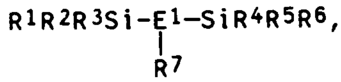

oder

$R^1R^2R^3Si\text{-}E^2\text{-}SiR^4R^5R^6$ ,

worin stehen
$R^1$ bis $R^6$ für einen $C_1$- bis $C_{18}$-Kohlenwasserstoffrest,
$R^7$ für Wasserstoff oder einen $C_1$-$C_{12}$-Kohlenwasserstoffrest,
X für Halogen oder einen ungesättigten $C_2$- bis $C_{18}$-Kohlenwasserstoffrest,
$E^1$ für ein Element der V. Hauptgruppe,
$E^2$ für ein Element der VI. Hauptgruppe.

**7.** Übergangsmetall-Katalysatorkomponente nach einem der Ansprüche 1 bis 6, erhältlich unter Verwendung von
20 bis 80 mol-% der Komponente der Stufe (3.1) und
20 bis 80 mol-% der Komponente der Stufe (3.2)
mit der Maßgabe, daß die Summe der mol-% 100 beträgt.

**8.** Verfahren zur Herstellung von Homopolymerisaten des Ethens sowie Copolymerisaten des Ethens mit untergeordneten Mengen an $C_3$- bis $C_8$-$\alpha$-Monoolefinen durch Polymerisation der Monomeren bei Temperaturen von 30 bis 200 °C und Drücken von 0,1 bis 200 bar mittels eines Ziegler-Katalysatorsystems aus
A) einer Übergangsmetall-Katalysatorkomponente und
B) einer Organoaluminium-Katalysatorkomponente der Formel $AlR_mX_{3-m}$, worin stehen
R für einen $C_1$- bis $C_{18}$-Kohlenwasserstoffrest
m für eine Zahl von 1 bis 3 und
X für einen Rest OR, Chlor, Brom oder Wasserstoff
sowie
C) einer zusätzlichen Katalysatorkomponente,
die entweder mindestens eine Organohalogenverbindung oder mindestens eine anorganische oder mindestens eine organische Stickstoff-Sauerstoff-Verbindung wie auch Gemische derselben darstellt,
dadurch gekennzeichnet, daß man die Übergangsmetall-Katalysatorkomponente gemäß einem der Ansprüche 1 bis 7 als Komponente A) verwendet.

**9.** Verfahren nach Anspruch 8, dadurch gekennzeichnet, daß das Atomverhältnis Übergangsmetall aus der Katalysatorkomponente A) zu Aluminium aus der Katalysatorkomponente B) im Bereich von 1:0,1 bis 1:500 und das Molverhältnis Organoaluminium-Katalysatorkomponente B) zu zusätzliche Katalysatorkomponente C) im Bereich von 1:0,001 bis 1:50 liegt.

## Claims

**1.** A transition-metal catalyst component for a Ziegler catalyst system, obtainable by
1) mixing, in a solvent, an inorganic, oxidic carrier with
1.1) a vanadium trihalide alcohol complex of the formula $VY_3 \cdot nZ\text{-}OH$, where
Y is chlorine or bromine,

n is from 1 to 6, and

Z is a monovalent, saturated, aliphatic, aromatic or araliphatic hydrocarbon radical having not more than 10 carbon atoms, and

1.2) a titanium halide or a titanium trihalide/aluminum trihalide complex, where the halogen is chlorine and/or bromine, or a titanium trihalide complex of the formula $TiY_3 \cdot nZ\text{-}OH$ or mixtures thereof, where

Y is chlorine or bromine,

n is from 1 to 6, and

Z is a monovalent, saturated, aliphatic, aromatic or araliphatic hydrocarbon radical having not more than 10 carbon atoms, and

1.3) a compound of the formula $BX_nY_mR_p$ or $SiX_nY_mR_q$ or mixtures thereof, where

X is OR,

Y is chlorine, bromine or hydrogen, and

R is a $C_1$- to $C_{18}$-hydrocarbon radical, with the proviso that $n > 0$ and $n+m+p = 3$ or $n+m+q = 4$,

2) removing the solvent by evaporation,

3) mixing the solid-phase intermediate from step 2) with

3.1) an organoaluminum catalyst component of the formula $AlR_mX_{3-m}$, where

R is a $C_1$- to $C_{18}$-hydrocarbon radical,

m is from 1 to 3, and

X is OR, chlorine, bromine or hydrogen,

and

3.2) an organic carboxylate or an organosilicon compound or a mixture thereof in an organic solvent which is inert toward the components in step (3), and

4) if desired, isolating the solid-phase intermediate by filtration, washing and drying.

**2.** A transition-metal catalyst component as claimed in claim 1, obtainable using a silica- or silica/aluminabased carrier in step (1).

**3.** A transition-metal catalyst component as claimed in claim 1 or 2, obtainable using from 0.002 to 3 mol of a titanium compound in step (1.2) and from 0.01 to 4 mol of a compound in step (1.3) per mole of a vanadium compound in step (1.1).

**4.** A transition-metal catalyst component as claimed in any of claims 1 to 3, obtainable observing an atomic ratio between the sum of the transition metals vanadium and titanium in the solid-phase intermediate in step (2) and aluminum of the organoaluminum component in step (3.1) of from 1:0.5 to 1:30.

**5.** A transition-metal catalyst component as claimed in any of claims 1 to 4, obtainable using an organic carboxylate of the general formula

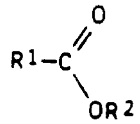

where $R^1$ and $R^2$ are a $C_1$-$C_{18}$-hydrocarbon radical, as component (3.2).

**6.** A transition-metal catalyst component as claimed in any of claims 1 to 5, obtainable using an organosilicon compound of the general formula

$R^1\ R^2\ R^3\ Six$,

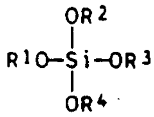 , 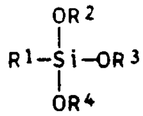 , 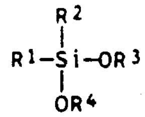 , 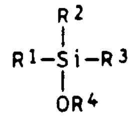

$R^1R^2R^3Si\text{-}SiR^4R^5R^6$,

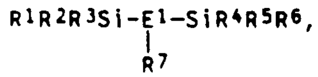

or

$R^1R^2R^3Si\text{-}E^2\text{-}SiR^4R^5R^6$,

where
$R^1$ to $R^6$ are a $C_1$- to $C_{18}$-hydrocarbon radical,
$R^7$ is hydrogen or a $C_1$-$C_{12}$-hydrocarbon radical,
X is halogen or an unsaturated $C_2$- to $C_{18}$-hydrocarbon radical,
$E^1$ is an element from main group V, and
$E^2$ is an element from main group VI.

**7.** A transition-metal catalyst component as claimed in any of claims 1 to 6, obtainable using
from 20 to 80 mol-% of the step (3.1) component and
from 20 to 80 mol-% of the step (3.2) component,
with the proviso that the sum is 100 mol-%.

**8.** A process for the preparation of a homopolymer of ethene or a copolymer of ethene with minor amounts of a $C_3$- to $C_8$-$\alpha$-monoolefin by polymerizing the monomers at from 30 to 200 °C and from 0.1 to 200 bar using a Ziegler catalyst system comprising
A) a transition-metal catalyst component and
B) an organoaluminum catalyst component of the formula $AlR_mX_{3-m}$, where
R is a $C_1$- to $C_{18}$-hydrocarbon radical,
m is from 1 to 3, and
X is OR, chlorine, bromine or hydrogen,
and
C) an additional catalyst component which is either one or more organohalogen compounds or one or more inorganic or organic nitrogen-oxygen compounds or mixtures thereof,
which comprises using a transition-metal catalyst component as claimed in any of claims 1 to 7 as component A).

**9.** A process as claimed in claim 8, wherein the atomic ratio between the transition metal from catalyst component A) and aluminum from catalyst component B) is in the range from 1:0.1 to 1:500, and the molar ratio between the organoaluminum catalyst component B) and the additional catalyst component C) is in the range from 1:0.001 to 1:50.

**Revendications**

**1.** Composant de catalyseur à base de metaux de transition pour un système catalytique de Ziegler, obtenu par
1) mélange, dans un solvant, d'un support inorganique à l'état oxydé avec
1.1) un complexe trihalogénure de vanadlum-alcool de formule $VY_3.nZ\text{-}OH$, dans laquelle
Y est mis pour un atome de chlore ou de brome,
n est mis pour un nombre de 1 à 6 et
Z est dis pour un reste hydrocarboné aliphatique, aromatique ou araliphatique saturé monovalent ne renfermant pas plus de 10 atomes de carbone, avec

1.2) un halogénure de titane, un complexe trihalogénure de titane-trihalogénure d'aluminium, l'halogène étant le chlore et/ou le brome, un complexe de trihalogénure de titane de formule $TiY_3.nZ\text{-}OH$ ou des mélanges de ceux-ci, formule dans laquelle

Y est mis pour un atome de chlore ou de brome,

n est mis pour un nombre de 1 à 6 et

Z est mis pour un reste hydrocarboné aliphatique, aromatique ou araliphatique saturé monovalent ne renfermant pas plus de 10 atomes de carbone, et avec

1.3) un composé de formule $BX_nY_mR_p$ ou $SiX_nY_mR_q$ ou des mélanges de tels composés, formule dans laquelle

X est mis pour un reste OR,

Y est mis pour un atome de chlore, de brome ou d'hydrogène et

R est mis pour un reste hydrocarboné en $C_1$-$C_{18}$ étant spécifié que $n > 0$ et que $n+m+p = 3$ ou $n+m+q = 4$,

2) élimination du solvant par évaporation,

3) mélange du produit intermédiaire en phase solide de l'étape 2) avec

3.1) un composant de catalyseur organoaluminique de formule $AlR_mX_{3-m}$, dans laquelle

R est mis pour un reste hydrocarboné en $C_1$-$C_{18}$,

m est mis pour un nombre de 1 à 3 et

X est mis pour un reste OR ou pour un atome de chlore, de brome ou d'hydrogène, et avec

3.2) un ester d'acide carboxylique organique, un compose du silicium organique ou des mélanges de ceux-ci dans un solvant organique qui est inerte à l'égard des composants de l'étape 3), et

4) au besoin isolement du produit intermédiaire en phase solide par filtration, lavage et sechage.

**2.** Composant de catalyseur à base de métaux de transition selon la revendication 1, obtenu avec utilisation, dans l'étape (1), d'un support à base de dioxyde de silicium ou de dioxyde de silicium-oxyde d'aluminium.

**3.** Composant de catalyseur à base de métaux de transition selon la revendication 1 ou 2, obtenu avec utilisation de 0,002 à 3 moles d'un composé du titane de l'étape (1.2) et de 0,01 à 4 moles d'un composé de l'étape (1.3) par mole d'un composé du vanadium de l'étape (1.1).

**4.** Composant de catalyseur à base de métaux de transition selon l'une quelconque des revendications 1 à 3, obtenu en respectant un rapport atomique de 1:0,05 à 1:30 de la somme des métaux de transition vanadium et titane du produit intermédiaire en phase solide de l'étape (2) à l'aluminium du composant organoaluminique de l'étape (3.1).

**5.** Composant de catalyseur à base de métaux de transition selon l'une quelconque des revendications 1 à 4, obtenu avec utilisation, comme composant (3.2), d'un ester d'acide carboxylique organique de formule générale

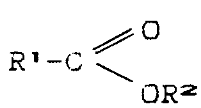

dans laquelle $R^1$ et $R^2$ sont mis pour des restes hydrocarbonés en $C_1$-$C_{18}$.

**6.** Composant de catalyseur à base de métaux de transition selon l'une quelconque des revendications 1 à 5, obtenus avec utilisation d'un composé du silicium organique de formules générales

$R^1R^2R^3SiX$,

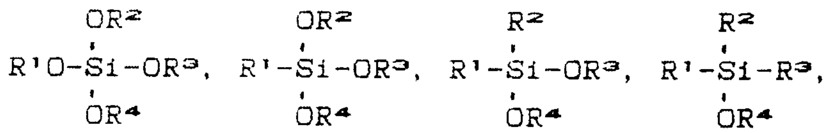

$R^1R^2R^3Si\text{-}SiR^4R^5R^6$,

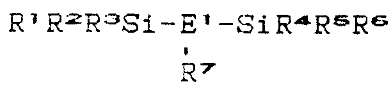

ou

$R^1R^2R^3Si\text{-}E^2\text{-}SiR^4R^5R^6$,

dans lesquelles
$R^1$ à $R^6$ sont mis chacun pour un reste hydrocarboné en $C_1$-$C_{18}$,
$R^7$ est mis pour un atome d'hydrogène ou un reste hydrocarbone en $C_1$-$C_{12}$,
X est mis pour un atome d'halogène ou un reste hydrocarboné en $C_2$-$C_{18}$ insature,
$E^1$ est mis pour un élément du groupe VA et
$E^2$ est mis pour un élément du groupe VIA.

7. Composant de catalyseur à base de métaux de transition selon l'une quelconque des revendications 1 à 6, obtenu avec utilisation de
20 à 80% en moles du composant de l'étape (3.1) et
20 à 80% en moles du composant de l'étape (3.2),
étant spécifié que la somme des pourcentages en moles s'élève à 100.

8. Procédé de préparation d'homopolymères de l'éthylène, ainsi que de copolymères de l'éthylène avec des quantités mineures d'$\alpha$-mono-oléfines en $C_3$-$C_8$, par polymérisation des monomères à des températures de 30 à 200 °C et sous des pressions de 0,1 à 200 bar, au moyen d'un système catalytique de Ziegler composé
A) d'un composant de catalyseur à base de métaux de transition et
B) d'un composant de catalyseur organoaluminique de formule $AlR_mX_{3-m}$ dans laquelle
R est mis pour un reste hydrocarboné en $C_1$-$C_{18}$,
m est mis pour un nombre de 1 à 3 et
X est mis pour un reste OR ou pour un atome de chlore, de brome ou d'hydrogène;
ainsi que
C) d'un composant de catalyseur supplémentaire
qui est constitué, soit par au moins un composé d'halogène organique, soit par au moins un composé d'axote-oxygène inorganique ou au moins un composé d'azote-oxygène organique, ainsi que par des mélanges de ceux-ci,
caractérisé en ce qu'on utilise, comme composant A), le composant de catalyseur à base de métaux de transition selon l'une quelconque des revendications 1 à 7.

9. Procédé selon la revendication 8, caractérisé en ce que le rapport atomique des métaux de transition du composant de catalyseur A) à l'aluminium du composant de catalyseur B) se situe dans la gamme de 1:0,1 à 1:500 et que le rapport molaire du composant de catalyseur organoaluminique B) au composant de catalyseur supplémentaire C) se situe dans la gamme de 1:0,001 à 1:50.